# DEMANDE DE BREVET EUROPEEN

(11) **EP 1 584 537 A1**
(43) Date de publication de la demande: **12.10.2005**
(21) Numéro de dépôt: 04364032.5
(22) Date de dépôt: 07.04.2004
(51) Int. Cl.: B62B 7/04, B62D 7/06

(54) **Voiture pour enfant à roues directionnelles solidarisées en pivotement par des moyens semi-rigides**

(30) Priorité: 07.04.2004 FR 0304312
(71) Demandeur: DOREL FRANCE SA, 49309 Cholet (FR)
(72) Inventeur: Ageneau, Laurent, 44210 Pornic (FR)
(74) Mandataire: Vidon, Patrice

(57) **Abrégé**

L'invention a pour objet une poussette du type comprenant, de chaque côté de ladite voiture, au moins une roue (3) dont l'axe de rotation est couplé à une pièce pivotante (4) sur un élément du châssis de ladite poussette de telle sorte que lesdites roues (3) soient directionnelles, caractérisée en ce qu'elle comprend des moyens semi-rigides (5), (6) montés en tension entre lesdites pièces pivotantes (4) et prévus de telle sorte que lesdites roues directionnelles (3) soient solidaires en pivotement.

## Description

Le domaine de l'invention est celui de la puériculture. Plus précisément, l'invention concerne les voitures d'enfant (appelées par la suite « poussettes », ce terme englobant ici tous les dispositifs de puériculture munis de roues et permettant le transport d'un ou de plusieurs enfants).

Les poussettes ont, le plus souvent, quatre roues, ou blocs de roues, montés respectivement à l'extrémité de piétements du châssis de la poussette, ou aux extrémités d'un axe transversal monté libre en rotation sur le châssis, en fonction notamment du mode de pliage retenu.

Pour améliorer le confort d'utilisation, on a proposé des roues avant montées libres en rotation sur un axe vertical, de façon qu'elles soient pivotantes et facilitent ainsi les changements de direction.

Dans la pratique, de telles roues directionnelles engendrent souvent des effets indésirables. En effet, sous l'effet des irrégularités du sol, les roues directionnelles peuvent s'animer d'un mouvement oscillant fou, désagréable tant pour l'enfant transporté que pour la personne qui dirige la poussette.

Il arrive également, par exemple sur un chemin présentant une surface inégale, que le sol impose aux roues directionnelles de prendre des orientations différentes, ce qui a tendance à engendrer des secousses ou à perturber la progression de la poussette.

On a donc proposé des moyens de verrouillage de chaque roue en position fixe, permettant de bloquer les roues directionnelles dans une orientation correspondant à une trajectoire en ligne droite de la poussette.

Cependant, la mise en oeuvre de ces moyens est peu aisée, puisqu'il faut se baisser devant chaque roue avant, et que ces dernières sont généralement sales.

En conséquence, les utilisateurs laissent, la plupart du temps, les roues en position fixe (ou en position libre), et ne profitent pas des avantages offerts par le choix entre les deux positions, selon les terrains.

Un autre problème des techniques connues est que les roues avant sont totalement indépendantes, et qu'en conséquence elles se retrouvent rarement parallèles, notamment lorsque le revêtement est inégal. Cela nuit bien sûr à la progression et au confort.

On a envisagé de solidariser les deux roues, mais cela conduit à des systèmes relativement complexes et rigides, ce qui pose des problèmes notamment pour le pliage, ainsi que pour la garde au sol.

L'invention a notamment pour objectif de pallier ces inconvénients de l'art antérieur.

Plus précisément, l'invention a pour objectif de proposer une poussette pour enfant équipée de roues directionnelles efficaces et faciles à mettre en oeuvre.

Notamment, l'invention a pour objectif de fournir une telle poussette présentant de bonnes qualités de stabilité, de contrôle de la direction, de roulage...

En ce sens, l'invention a pour objectif de fournir une telle poussette qui évite ou limite notablement les mouvements oscillants des roues directionnelles, et les absences de parallélisme.

L'invention a aussi pour objectif de fournir une telle poussette qui soit adaptée et/ou adaptable à différents types de terrains, de façon simple et efficace.

Un autre objectif de l'invention est encore de fournir une telle poussette ayant une garde au sol importante.

L'invention a également pour objectif de fournir une telle poussette qui soit aisément et efficacement pliable.

Ces objectifs, ainsi que d'autres qui apparaîtront par la suite, sont atteints selon l'invention à l'aide d'une poussette, comprenant au moins deux roues ou blocs de roues directionnels, et des moyens semi-rigides agissant sur lesdites roues ou lesdits blocs de roues directionnels de façon qu'ils soient solidaires en pivotement.

Une telle liaison entre les roues directionnelles permet d'éviter ou à tout le moins de limiter considérablement la possibilité pour celles-ci de prendre un mouvement oscillant sous l'effet des irrégularités ou des aspérités du sol.

Par ailleurs, le montage en tension de moyens semi-rigides (tels que des câbles ou une courroie) s'avère simple et peut être obtenu rapidement. On obtient, grâce à ces moyens, un résultat efficace, fiable et à moindre coût.

On note que l'on oppose ici les termes de « liaison par des moyens semi-rigides », ou systèmes de roues directionnelles liées par des parallélogrammes déformables ou autres tringleries mettant en oeuvre des pièces rigides, comme c'est le cas sur certains véhicules légers dans d'autres domaines que la puériculture, tels que par exemple dans le karting.

En effet, ces systèmes connus forment généralement des ensembles mécaniques complexes, nécessitant des réglages lors du montage.

En tout état de cause, ces ensembles mécaniques sont peu compatibles avec le domaine des poussettes qui doivent être légères et peu encombrantes (en limitant notamment l'encombrement dans le plan de roulage), souples d'utilisation et rester fiables, en particulier lorsqu'elles évoluent sur des terrains susceptibles de causer un encrassement sensible.

Selon une solution préférée, lesdites roues directionnelles sont montées à l'extrémité de piétements reliés par une traverse éloignée, au moins vers le haut, dudit axe de rotation desdites roues directionnelles, lesdits moyens semi-rigides s'étendant entre lesdites pièces pivotantes en longeant sensiblement lesdits piétements et ladite traverse.

Contrairement aux poussettes traditionnelles présentant classiquement une traverse entre les piétements du châssis, cette traverse étant généralement dans l'alignement de l'axe de rotation des roues directionnelles ou au voisinage de celui-ci, on augmente ainsi notablement la garde au sol de la poussette, lui permettant de franchir aisément de petits obstacles sans avoir à soulever la poussette.

De façon avantageuse, lesdites roues ou lesdits blocs de roues présentent chacun un axe de rotation couplé à une pièce pivotante sur un élément du châssis de ladite poussette, et en ce que lesdits moyens semi-rigides sont montés en tension entre lesdits moyens semi-rigides.

Préférentiellement, lesdites roues directionnelles sont montées à l'extrémité de piétements, lesdits moyens semi-rigides, longeant sensiblement chacun desdits piétements sur une partie de leur longueur. et s'étendant sensiblement horizontalement entre lesdits piétements de façon surélevé par rapport à l'axe desdites roues ou desdits blocs de roues.

Selon un mode de réalisation particulier de l'invention, lesdites roues ou lesdits blocs de roues sont montés à l'avant de ladite poussette.

Selon une première approche de l'invention, lesdits moyens semi-rigides comprennent avantageusement au moins un câble.

Dans ce cas, les extrémités dudit ou desdits câbles peuvent avantageusement porter au moins un téton, et en ce que chacune desdits pièces pivotantes présente au moins un logement destiné à recevoir ledit téton.

Préférentiellement, lesdits moyens semi-rigides comprennent deux câbles montés sensiblement parallèlement sur lesdites pièces pivotantes de telle sorte que le déplacement d'un desdits câbles dans une direction entraîne le déplacement de l'autre desdits câbles dans une direction opposée.

Selon une deuxième approche avantageuse, lesdits moyens semi-rigides peuvent définir une boucle fermée. Ainsi, lesdits moyens semi-rigides peuvent avantageusement comprendre au moins une courroie ou une chaîne.

En particulier, il peut comprendre au moins une courroie crantée.

De façon préférentielle, ladite boucle s'étend sensiblement horizontalement entre lesdites pièces pivotantes.

Avantageusement, la poussette comprend des moyens pour déporter ladite boucle au dessus de la hauteur maximale desdites roues ou desdits blocs de roues.

Ainsi, lesdites pièces pivotantes peuvent par exemple présenter un prolongement portant en sa partie supérieure un pignon ou une poulie recevant ladite boucle.

Selon une autre approche, lesdits moyens pour déporter peuvent également comprenndre des moyens de renvoi d'angles.

Selon une autre caractéristique avantageuse de l'invention, lesdits moyens semi-rigides comprennent des moyens amortisseurs de chocs antagonistes susceptibles d'être subis par lesdites roues ou lesdits blocs de roues directionnels.

Préférentiellement, lesdits moyens amortisseurs comprennent des moyens permettant l'allongement et/ou la diminution de la longueur desdits moyens semi-rigides.

Lesdits moyens amortisseurs peuvent ainsi comprendre des moyens de rappel.

Notamment, dans ce cas, on peut prévoir que lesdits moyens semi-rigides comprennent au moins deux tronçons semi-rigides reliés entre eux par lesdits moyens de rappel.

Selon un autre mode de mise en oeuvre, dans le cas de câbles, ces derniers peuvent coulisser au moins en partie à l'intérieur d'une gaine. Avantageusement, au moins une desdites gaines forment alors au moins en partie lesdits moyens amortisseurs.

Selon encore une autre caractéristique avantageuse de l'invention, la poussette comprend des moyens de verrouillage/déverrouillage de la fonction directionnelle desdites roues ou desdits blocs de roues, de façon qu'ils restent parallèles à l'axe de roulage de ladite poussette.

Lesdits moyens de verrouillage/déverrouillage peuvent ainsi comprendre un élément solidaire dudit châssis et à l'intérieur duquel est monté au moins une pièce de blocage mobile entre une position dans laquelle elle coopère avec un logement prévu dans ladite pièce pivotante pour empêcher celle-ci de tourner et une position de retrait dans laquelle ladite pièce pivotante peut tourner librement.

Selon un mode de mise en oeuvre particulier, ladite pièce de blocage est actionnée par une rampe mobile à l'intérieur dudit élément solidaire dudit châssis.

De façon avantageuse, le profil de ladite rampe est adaptée de façon que le verrouillage desdites roues soit disjonctable, en cas de forçage au delà d'un seuil prédéterminé.

Ladite pièce de blocage peut notamment être une bille.

Préférentiellement, ladite rampe coopère avec un ressort de compression tendant à l'amener dans sa position de verrouillage lorsque la position verrouillée est sélectionnée.

Selon une approche avantageuse, lesdits moyens de verrouillage/déverrouillage agissent sur lesdits moyens semi-rigides.

Selon une autre caractéristique avantageuse, on peut prévoir que lesdits moyens semi-rigides circulent au moins en partie à l'intérieur d'un élément du châssis de ladite poussette.

Notamment, lesdits moyens semi-rigides peuvent circuler à l'intérieur d'une partie des piètements et/ou du guidon de ladite poussette.

Dans ce cas, la poussette peut comprendre une commande de verrouillage/déverrouillage montée sur ledit guidon et agissant sur les moyens semi-rigides circulant à l'intérieur de ce dernier.

De façon avantageuse, lesdits moyens de verrouillage/déverrouillage mentionnés plus haut sont commandés de façon déportée, à l'aide moyens de commande.

Lesdits moyens de commande peuvent ainsi comprendre un levier de commande monté sur le guidon de ladite poussette. Ledit levier est préférentiellement relié à ladite rampe par au moins un câble.

De façon préférentielle, ledit guidon présente au moins deux moyens de retenue dudit levier, lesdits deux moyens de retenue étant séparés l'un de l'autre pour permettre le passage de la position verrouillée à la position déverrouillée, ou inversement, lorsque ledit levier passe d'un moyen de retenue à l'autre.

Avantageusement, lesdits moyens de retenue sont des découpes réalisées dans la paroi d'un manchon solidaire dudit guidon.

De façon avantageuse, ces découpes sont prévues sur ledit manchon (91) de telle sorte qu'il soit nécessaire de tourner le levier d'un quart de tour pour le faire passer d'une découpe à l'autre.

Selon encore un autre aspect avantageux de l'invention, l'axe de rotation desdites roues directionnelles est porté par un palier monté mobile à rotation sur ladite pièce pivotante autour d'un axe sensiblement horizontal et en ce que des moyens de suspension sont prévus entre ledit palier et ladite pièce pivotante.

D'autres caractéristiques et avantages de l'invention apparaîtront plus clairement à la lecture de la description suivante d'un mode de réalisation préférentiel de l'invention, donné à titre d'exemple illustratif et non limitatif et des dessins annexés parmi lesquels :
- les figures 1, 2 et 3 sont des vues respectivement en perspective, de face et de dessus de la partie du châssis équipée de roues directionnelles selon l'invention ;
- la figure 4 est une vue de détail du système directionnel d'une roue de poussette selon l'invention ;
- les figures 5, 6 et 7 sont des vues schématiques des moyens de liaison semi-rigides reliant les roues directionnelles selon l'invention, les roues étant respectivement en position droite, en position tournée et en situation de choc ;
- la figure 8 est une vue éclatée du système directionnel d'une roue de poussette selon l'invention ;
- la figure 9 est une vue en coupe de moyens de verrouillage/déverrouillage d'une roue directionnelle selon l'invention ;
- la figure 10 est une vue en perspective d'un levier de commande de moyens de verrouillage/déverrouillage d'une roue directionnelle de poussette selon l'invention ;
- la figure 11 illustre un autre mode de réalisation de l'invention, mettant en oeuvre une courroie crantée, les roues avant étant vues de dessus ;
- la figure 12 présente une roue du système de la figure 11, et ses moyens d'actionnement par la courroie.

Comme indiqué précédemment, le principe de l'invention consiste à rendre solidaires en pivotement les roues directionnelles d'une poussette à l'aide de moyens semi-rigides (par exemple des câbles) montés en tension entre ces roues.

On note que les roues directionnelles d'une poussette sont généralement placées à l'avant de celle-ci. Toutefois, le principe de l'invention peut également s'appliquer à une poussette qui serait équipée de roues directionnelles à l'arrière.

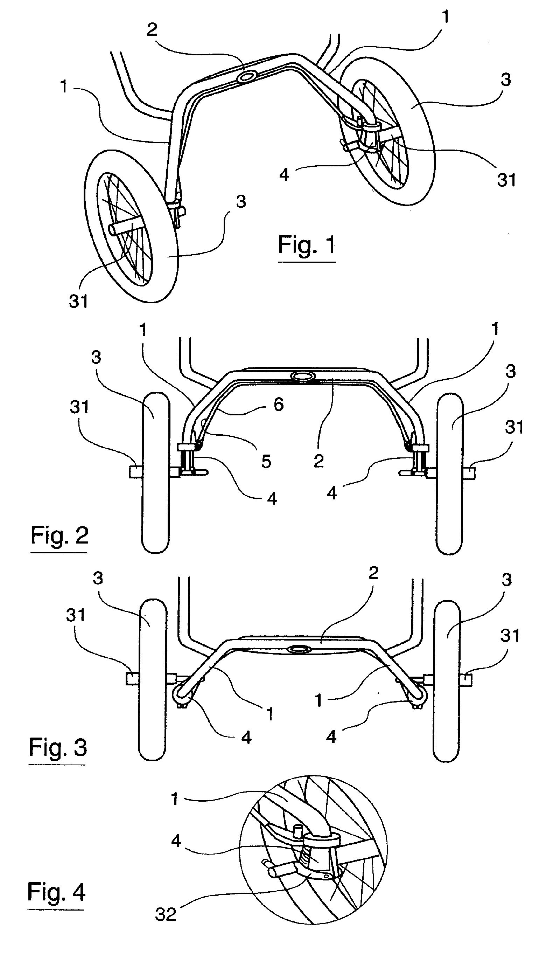

En référence aux figures 1 à 4, le châssis d'une poussette comprend, selon le présent mode de réalisation, des piétements 1 reliés entre eux par une traverse 2.

Comme l'illustrent les figures 1 à 3, les piétements 1 et la traverse 2 forment ensemble un U inversé s'étendant essentiellement dans un plan vertical de telle sorte que la traverse 2 soit relativement éloignée de l'axe de rotation 31 des roues 3. Il n'est pas nécessaire, selon l'invention, que les roues soient reliées par un essieu rigide.

L'axe de rotation 31 des roues 3 est supporté par des paliers 32, montés mobiles à rotation sur une pièce de liaison 4 autour d'un axe 41.

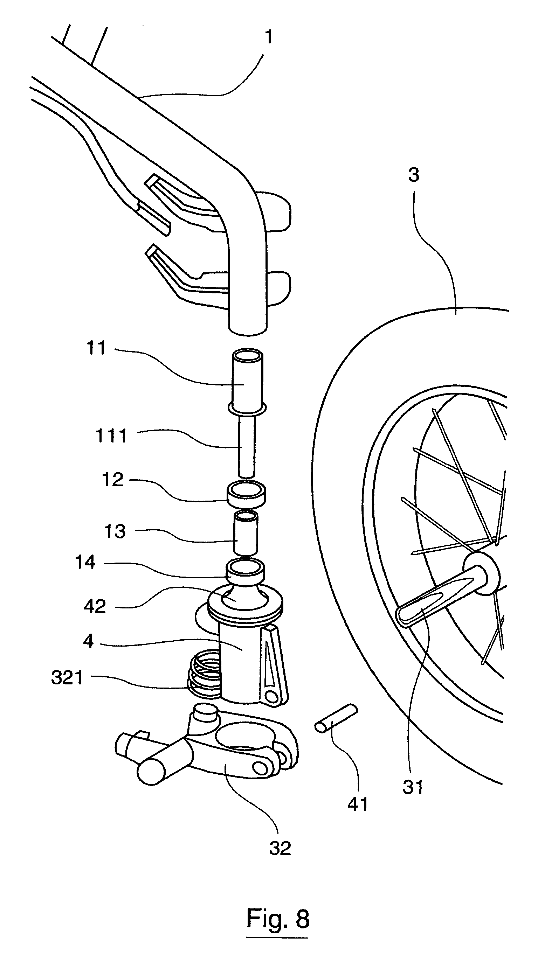

On note qu'un ressort hélicoïdal 321, formant moyens de suspension est intercalé entre le palier 32 et la pièce de liaison 4. Cet aspect est discuté par la suite, en relation avec la figure 8.

Les pièces de liaison 4, désignées dans la suite de la description par « pièces pivotantes », sont montées libres à rotation aux extrémités libres de piétements 1 à l'aide d'un ensemble mécanique formé par :
- un bouchon 11 ;
- un premier roulement 12 ;
- une entretoise 13 ;
- un deuxième roulement 14.

La tige 111 du bouchon 11, l'entretoise 13 et les roulements 12 et 14 viennent se loger dans l'évidement central de la pièce pivotante 4, comme l'illustre la vue éclatée de la figure 8.

Selon l'invention, des moyens semi-rigides, en l'occurrence deux câbles 5, 6 sont montés en tension entre les pièces pivotantes 4 de telle sorte que les roues directionnelles soient solidaires en pivotement.

Tel que cela apparaît clairement sur les figures 1 et 2, les câbles 5, 6 s'étendent entre les pièces pivotantes 4 en longeant l'ensemble formé par les piétements 1 et la traverse 2.

On comprend donc que, grâce à un tel agencement, la garde au sol d'une poussette selon l'invention peut être considérablement augmentée.

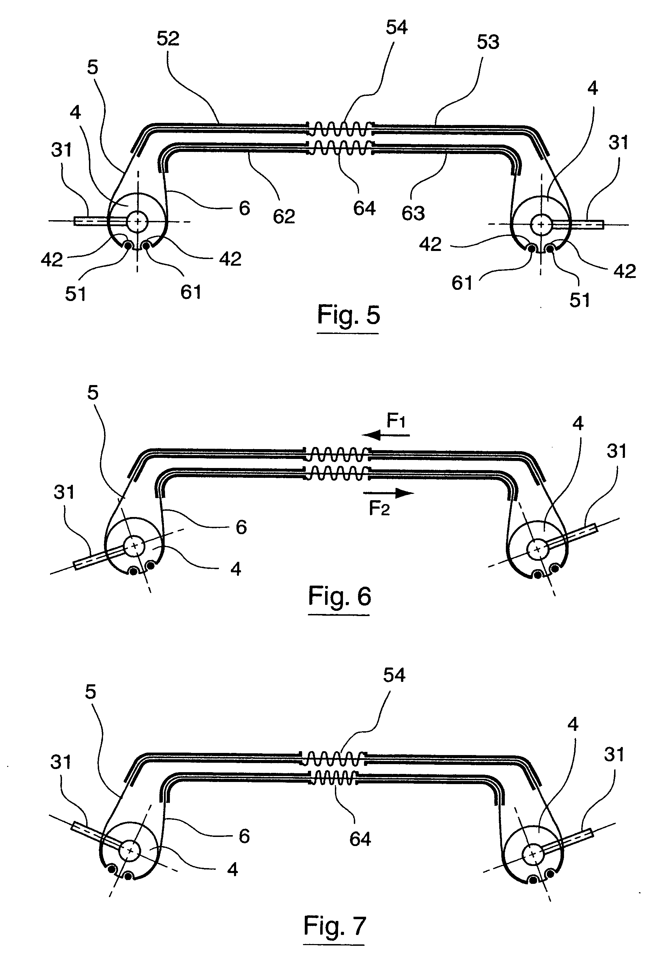

Le principe de la liaison entre les pièces pivotantes 4 va maintenant être explicitée en référence aux figures 5 et 7.

Tel qu'illustré par ces figures, les câbles 5 et 6 présentent à chacune de leurs extrémités un téton, respectivement 51, 61, retenus dans des logements 42 ménagés dans les pièces pivotantes 4.

Ces câbles 5 et 6 forment autour des pièces pivotantes 4 une boucle discontinue de telle sorte que le déplacement d'un des câbles dans une direction entraîne le déplacement de l'autre câble dans une direction opposée. Ceci est illustré par la figure 6 : considérant en l'occurrence une rotation des pièces pivotantes 4 dans le sens inverse des aiguilles d'une montre, le câble 5 se déplace dans le sens indiqué par la flèche F1, tandis que le câble 6 se déplace dans le sens indiqué par la flèche F2.

Dans le présent mode de réalisation, les câbles 5, 6 se décomposent chacun en deux tronçons dont les coulissements sont guidés respectivement par les gaines 52, 53 et 62, 63, ces tronçons étant reliés entre eux respectivement par des moyens de rappel, ici les ressorts 54 et 64, formant des moyens amortisseurs comme cela va être expliqué ci-après.

En référence à la figure 7 qui illustre une situation dans laquelle un choc ou un appui (ou autre) provoque des rotations antagonistes des pièces pivotantes 4, les ressorts 54 et 64 agissent de façon à éviter aux câbles de casser et/ou à leurs extrémités de se désengager de leur logement.

En effet, dans le cas de figure illustrée, le ressort 54 travaille en traction et autorise l'augmentation de l'espace séparant les deux tronçons du câble 5, augmentant ainsi la distance séparant les deux extrémités du câble 5.

Inversement, le ressort 64 travaille en compression et réduit l'espace séparant les deux tronçons du câble 6, réduisant ainsi la distance entre les deux extrémités du câble 6.

Le cas contraire (ressort 54 en compression et ressort 64 en traction) est bien sûr possible.

On note que la raideur des ressorts 54 et 64 est ajustée pour que la fonction amortisseur de ceux-ci soit réservée au type de situation illustrée par la figure 7, et que ces ressorts 54 et 64 ne travaillent ni en compression ni en traction (ou le moins possible) dans le cadre d'un changement d'orientation des roues directionnelles illustré à titre d'exemple par la figure 6.

On note par ailleurs que les ressorts 54 et 64 sont positionnés préférentiellement le long de la traverse 2 du châssis, sensiblement à mi-distance des roues.

Selon un autre mode de réalisation de l'invention, cette fonction d'amortissement peut être assurée directement par les gaines, en exploitant l'élasticité de cette dernière. L'ensemble est ainsi simplifié, puisqu'il n'y a plus que deux gaines et deux câbles circulant respectivement dans chacune des deux gaines.

Selon une autre approche de l'invention, on peut prévoir que le ou les câbles, montés ou non dans une gaine, circulent au moins en partie à l'intérieur d'éléments du châssis (et notamment les piètements).

On peut également prévoir que ce ou ces câbles circulent ensuite dans le guidon, de façon qu'ils soient dissimulés. Cette approche permet en outre de définir de nouvelles fonctions, liées à la présence des éléments semi-rigides a niveau du guidon, par exemple pour le verrouillage des roues directionnelles en position fixe, ou pour fournir un indicateur de la position des roues (par exemple sous la forme d'une aiguille reliée à un des câbles). La jonction et l'amortissement peuvent également être effectuées à ce niveau.

Selon un autre aspect de l'invention, on prévoit des moyens de verrouillage des roues directionnelles en position fixe.

Ce principe est connu en soi. La technique connue pour ce faire est cependant peu pratique.

Selon une caractéristique de l'invention, on prévoit donc une commande de ces moyens de verrouillage déportée sur le guidon.

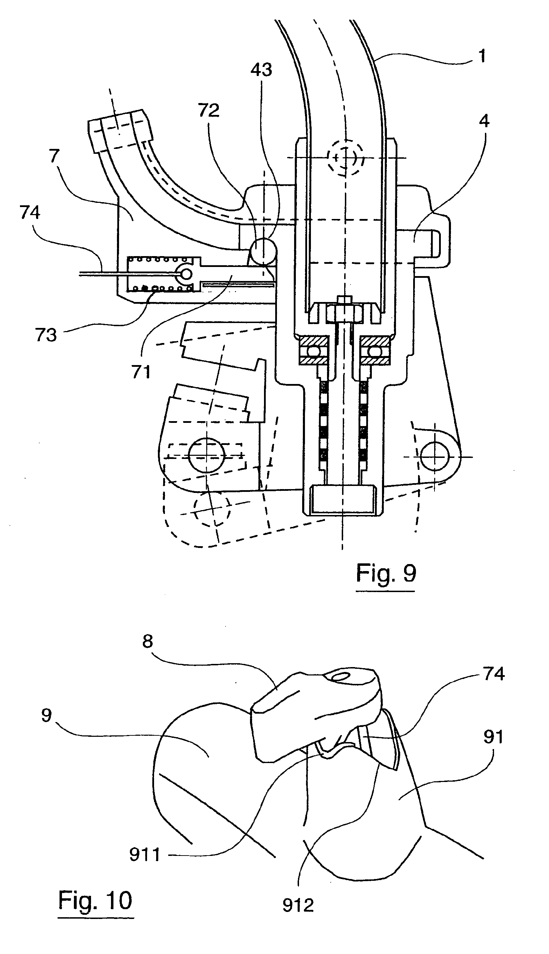

Ces moyens de verrouillage sont illustrés par la figure 9. Ils comprennent un pion 71 dont l'extrémité forme une rampe et une bille 72 formant moyen de blocage de la pièce pivotante 4 dans une position selon laquelle les roues sont parallèles à l'axe de roulage de la poussette.

Le pion 71 est susceptible de coulisser à l'intérieur d'un élément 7 solidaire du piétement 1. Lorsque ce pion 71 coulisse vers la droite de la figure 9, la rampe formée à son extrémité pousse la bille 72 vers le haut, dans un logement hémisphérique 43 prévu à cet effet dans la pièce pivotante 4, bloquant alors cette dernière en rotation.

A l'inverse, lorsque le pion 71 coulisse suffisamment vers la gauche de la figure 9, la bille 72 tombe sous l'effet de la gravité et se dégage donc complètement du logement 43 de la pièce pivotante, rendant cette dernière libre en rotation.

On note que le pion 71 coopère avec un ressort 74 qui tend à amener le pion 71 dans sa position de verrouillage lorsque la position verrouillée est sélectionnée.

On notera également que le profil de la rampe est avantageusement choisi de façon que le blocage des roues soit « disjonctable », c'est-à-dire que le système de blocage se libère de la position verrouillée, si on force dessus au-delà d'un seuil prédéterminé. On évite ainsi les risques de détérioration.

Ce profil est ainsi, par exemple, bombé, ou formé d'au moins deux plans inclinés présentant des angles différents.

Selon une variante, la bille 72 peut bien sûr être supprimée. Dans ce cas, le pion, ou navette, 71 est en contact direct avec le logement 43 de la pièce 4. Les formes du pion et du logement sont complémentaires. Elles peuvent notamment être de section carrée, rectangulaire ou ronde.

De plus, le pion 71 est actionné par l'intermédiaire d'un câble 74 et commandé de façon déportée à l'aide de moyens de commande comprenant un levier 8 accessible à partir du guidon de la poussette.

Ce levier 8 et son mode de coopération avec le guidon de la poussette sont illustrés par la figure 10.

Selon ce mode de réalisation, le levier 8 est accessible à partir du guidon 9 de la poussette, le guidon présentant un manchon 91 présentant des moyens de retenue du levier 8 et au travers duquel s'étend le câble 74, reliant le levier 8 au pion 71.

Le manchon 91 présentant des découpes 911 et 912 formant les moyens de retenue du levier 8. Comme cela apparaît clairement, la découpe 912 est plus profonde que la découpe 911.

Ainsi, lorsque le levier s'inscrit dans la découpe 912, le câble est relâché sur une course suffisante pour que le ressort 73 actionne le pion 71 jusqu'à une position où il amène la bille 72 en position de blocage.

Inversement, lorsque le levier 8 s'inscrit dans la découpe 911, le câble est tiré de telle sorte que le pion 71 libère la bille 72 du logement 43 de la pièce pivotante 4.

On note que les découpes 911 et 912 sont prévues sur le manchon 91 de telle sorte que le levier passe de l'une à l'autre notamment en opérant un quart de tour.

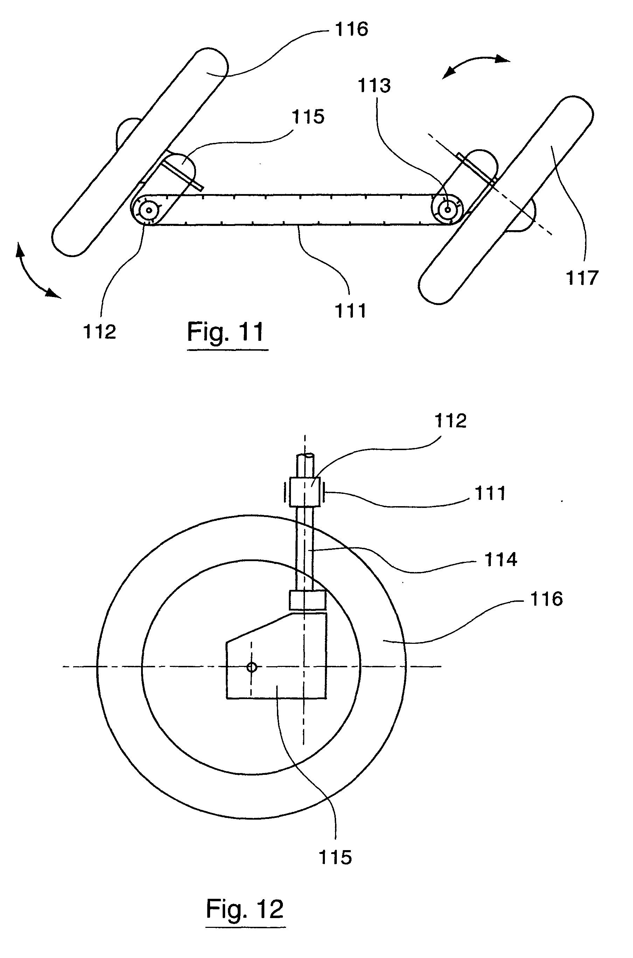

Les figures 11 et 12 illustrent un autre mode de réalisation de l'invention, selon lequel les moyens semi-rigides forment une boucle fermée. Cette boucle peut être un câble, une chaîne, ou une courroie.

Dans l'exemple de la figure 11, il s'agit d'une courroie crantée 111, circulant entre deux pignons 112 et 113 montés à la partie supérieure d'un prolongement 114 (figure 12) solidaire de l'élément pivotant 115 portant la roue 116 et s'étendant verticalement.

Les pignons 112 et 113 se trouvent ainsi positionnés au dessus du niveau des roues 116 et 117. Ces dernières peuvent donc pivoter sur 360°, et le cas échéant faire plusieurs tours dans le même sens, sans limitation ni blocage en butée.

Dans le cas où il n'est pas possible, ou souhaitable, de prévoir de tels prolongements 114, des renvois d'angles (pignons, poulies ou autres) peuvent être prévus pour conserver cette fonction de rotation sur 360°.

Les aspects optionnels déjà présentés ci-dessus (notamment pour le verrouillage) peuvent bien sûr s'appliquer également à ce mode de réalisation.

## Revendications

1. Poussette comprenant au moins deux roues (3) ou blocs de roues directionnels, **caractérisée en ce qu'**elle comprend des moyens semi-rigides (5, 6) agissant sur lesdites roues ou lesdits blocs de roues directionnels (3) de façon qu'ils soient solidaires en pivotement.

2. Poussette selon la revendication 1, **caractérisée en ce que** lesdites roues ou lesdits blocs de roues présentent chacun un axe de rotation couplé à une pièce pivotante (4) sur un élément du châssis de ladite poussette, et **en ce que** lesdits moyens semi-rigides sont montés en tension entre lesdits moyens semi-rigides (5, 6).

3. Poussette selon l'une quelconque des revendications 1 et 2, **caractérisée en ce que** lesdites roues directionnelles (3) sont montées à l'extrémité de piétements (1), lesdits moyens semi-rigides (5, 6), longeant sensiblement chacun desdits piétements (1) sur une partie de leur longueur. et s'étendant sensiblement horizontalement entre lesdits piètements (1) de façon surélevé par rapport à l'axe desdites roues ou desdits blocs de roues.

4. Poussette selon l'une quelconque des revendications 1 à 3, **caractérisée en ce que** lesdites roues ou lesdits blocs de roues sont montés à l'avant de ladite poussette.

5. Poussette selon l'une quelconque des revendications 1 à 4,, **caractérisée en ce que** lesdits moyens semi-rigides (5, 6) comprennent au moins un câble.

6. Poussette selon la revendication 5, **caractérisée en ce que** les extrémités dudit ou desdits câbles (5, 6) portent au moins un téton (51, 61), et **en ce que** chacune desdits pièces pivotantes (4) présente au moins un logement (42) destiné à recevoir ledit téton (51, 61).

7. Poussette selon l'une quelconque des revendications 5 et 6, **caractérisée en ce que** lesdits moyens semi-rigides (5, 6) comprennent deux câbles montés sensiblement parallèlement sur lesdites pièces pivotantes (4) de telle sorte que le déplacement d'un desdits câbles dans une direction entraîne le déplacement de l'autre desdits câbles dans une direction opposée.

8. Poussette selon l'une quelconque des revendications 1 à 4, **caractérisée en ce que** lesdits moyens semi-rigides définissent une boucle fermée.

9. Poussette selon la revendication 8, **caractérisée en ce que** lesdits moyens semi-rigides comprennent au moins une courroie ou une chaîne.

10. Poussette selon la revendication 9, **caractérisée en ce qu'**elle comprend au moins une courroie crantée.

11. Poussette selon l'une quelconque des revendications 8 à 10, **caractérisée en ce que** ladite boucle s'étend sensiblement horizontalement entre lesdites pièces pivotantes (4).

12. Poussette selon l'une quelconque des revendications 8 à 11, **caractérisée en ce qu'**elle comprend des moyens pour déporter ladite boucle au dessus de la hauteur maximale desdites roues ou desdits blocs de roues.

13. Poussette selon les revendications 11 et 12, **caractérisée en ce que** lesdites pièces pivotantes (4) présentent un prolongement portant en sa partie supérieure un pignon ou une poulie recevant ladite boucle.

14. Poussette selon l'une quelconque des revendications 12 et 13, **caractérisée en ce que** lesdits moyens pour déporter comprennent des moyens de renvoi d'angles.

15. Poussette selon l'une quelconque des revendication 1 à 14, **caractérisée en ce que** lesdits moyens semi-rigides (5, 6) comprennent des moyens amortisseurs (54, 64) de chocs antagonistes susceptibles d'être subis par lesdites roues ou lesdits blocs de roues directionnels (3).

16. Poussette selon la revendication 15, **caractérisée en ce que** lesdits moyens amortisseurs (54, 64) comprennent des moyens permettant l'allongement et/ou la diminution de la longueur desdits moyens semi-rigides (5, 6).

17. Poussette selon l'une quelconque des revendications 15 et 16, **caractérisée en ce que** lesdits moyens amortisseurs (54, 64) comprennent des moyens de rappel.

18. Poussette selon la revendication 17, **caractérisée en ce que** lesdits moyens semi-rigides (5, 6) comprennent au moins deux tronçons semi-rigides reliés entre eux par lesdits moyens de rappel.

19. Poussette selon l'une quelconque des revendications 5 à 7, **caractérisée en ce que** le ou lesdits câbles (5, 6) coulissent au moins en partie à l'intérieur d'une gaine (52, 53, 62, 63).

20. Poussette selon les revendications 15 et 19, **caractérisé en ce qu'**au moins une desdites gaines (52, 53, 62, 63) forment au moins en partie lesdits moyens amortisseurs.

21. Poussette selon l'une quelconque des revendications 1 à 20, **caractérisée en ce qu'**elle comprend des moyens de verrouillage/déverrouillage de la fonction directionnelle desdites roues ou desdits blocs de roues, de façon qu'ils restent parallèles à l'axe de roulage de ladite poussette.

22. Poussette selon la revendication 21, **caractérisée en ce que** lesdits moyens de verrouillage/déverrouillage comprennent un élément (7) solidaire dudit châssis et à l'intérieur duquel est monté au moins une pièce de blocage (72) mobile entre une position dans laquelle elle coopère avec un logement (43) prévu dans ladite pièce pivotante (4) pour empêcher celle-ci de tourner et une position de retrait dans laquelle ladite pièce pivotante (4) peut tourner librement.

23. Poussette selon la revendication 22, **caractérisée en ce que** ladite pièce de blocage (72) est actionnée par une rampe (71) mobile à l'intérieur dudit élément (7) solidaire dudit châssis.

24. Poussette selon la revendication 23, **caractérisée en ce que** le profil de ladite rampe (71) est adaptée de façon que le verrouillage desdites roues soit disjonctable, en cas de forçage au delà d'un seuil prédéterminé.

25. Poussette selon l'une quelconque des revendications 22 à 24, **caractérisée en ce que** ladite pièce de blocage (72) est une bille.

26. Poussette selon l'une quelconque des revendications 23 à 25, **caractérisée en ce que** ladite rampe (71) coopère avec un ressort de compression (73) tendant à l'amener dans sa position de verrouillage lorsque la position verrouillée est sélectionnée.

27. Poussette selon la revendication 22, **caractérisée en ce que** lesdits moyens de verrouillage/déverrouillage agissent sur lesdits moyens semi-rigides.

28. Poussette selon l'une quelconque des revendications 1 à 27, **caractérisée en ce que** lesdits moyens semi-rigides circulent au moins en partie à l'intérieur d'un élément du châssis de ladite poussette.

29. Poussette selon la revendication 28, **caractérisé en ce que** lesdits moyens semi-rigides circulent à l'intérieur d'une partie des piètements et/ou du guidon de ladite poussette.

30. Poussette selon les revendications 27 et 29, **caractérisée en ce qu'**elle comprend une commande de verrouillage/déverrouillage montée sur ledit guidon et agissant sur les moyens semi-rigides circulant à l'intérieur de ce dernier.

31. Poussette selon l'une quelconque des revendications 22 à 30, **caractérisée en ce que** lesdits moyens de verrouillage/déverrouillage sont commandés de façon déportée, à l'aide moyens de commande.

32. Poussette selon la revendication 31, **caractérisée en ce que** lesdits moyens de commande comprennent un levier de commande (8) monté sur le guidon (9) de ladite poussette.

33. Poussette selon la revendication 31, **caractérisée en ce que** ledit levier (8) est relié à ladite rampe (71) par au moins un câble (74).

34. Poussette selon l'une quelconque des revendications 32 et 33, **caractérisée en ce que** ledit guidon (9) présente au moins deux moyens de retenue dudit levier (8), lesdits deux moyens de retenue (911, 912) étant séparés l'un de l'autre pour permettre le passage de la position verrouillée à la position déverrouillée, ou inversement, lorsque ledit levier (8) passe d'un moyen de retenue à l'autre.

35. Poussette selon la revendication 34, **caractérisée en ce que** lesdits moyens de retenue (911, 912) sont des découpes réalisées dans la paroi d'un manchon (91) solidaire dudit guidon (91).

36. Poussette selon la revendication 35, **caractérisée en ce que** lesdites découpes (911, 912) sont prévues sur ledit manchon (91) de telle sorte qu'il soit nécessaire de tourner le levier (8) d'un quart de tour pour le faire passer d'une découpe à l'autre.

37. Poussette selon l'une quelconque des revendications 1 à 35, **caractérisée en ce que** l'axe de rotation (31) desdites roues directionnelles est porté par un palier (32) monté mobile à rotation sur ladite pièce pivotante (4) autour d'un axe sensiblement horizontal et **en ce que** des moyens de suspension sont prévus entre ledit palier (32) et ladite pièce pivotante (4).
